# EUROPEAN PATENT APPLICATION

(11) **EP 4 851 885 A1**
(43) Date of publication of application: **09.12.2026**
(21) Application number: 25212972.1
(22) Date of filing: 03.11.2025
(51) Int. Cl.: G06Q 10/0631, G06Q 10/0637, G06Q 10/067, G06Q 50/04, G06Q 50/06

(54) **CARBON EMISSION REDUCTION PLAN RECOMMENDATION SYSTEM AND METHOD**

(30) Priority: 05.06.2025 CN 202510744046
(71) Applicant: Cedars Digital Pte. Ltd., 048619 Singapore (SG)
(72) Inventor: CHEN, Fu-Ming, Taipei City (TW); SUN, Hsuan-Wen, New Taipei City (TW); LO, Fang-Yu, Taipei City (TW); CHEN, Shao-Yan, Taipei City (TW); HUANG, Tzu-Ching, Taipei City (TW); LIN, Jhang-Neng, Taipei City (TW)
(74) Representative: Viering, Jentschura & Partner mbB Patent- und Rechtsanwälte

(57) **Abstract**

A carbon emission reduction plan recommendation system (20) and a method thereof. While integrating carbon emission data submitted by enterprises and obtaining specifications of equipment and raw materials (242) from external databases (24), the computer-implemented system operates the emission reduction plan recommendation method to determine and analyze enterprise carbon emission hotspots so as to generate recommendations of carbon emission reduction plans. In the method, an artificial intelligence algorithm is operated in the system for analyzing and comparing the carbon emission data for generating a list of carbon emission recommendations, and the system visualizes the effectiveness and cost of carbon emission reduction of each of the emission reduction plans. A decision maker can select a suitable carbon emission reduction plan based on actual needs.

## Description

### FIELD OF THE INVENTION

The present invention relates to a carbon emission reduction plan technology, and more particularly to a method using a computer technology to integrate carbon asset data internally and externally of an enterprise for hotspot analysis and carbon emission reduction plan recommendation, and a system thereof.

### BACKGROUND OF THE INVENTION

Greenhouse gas (GHG) refers to a gas that can absorb and re-radiate infrared radiations emitted from the surface of the earth. Greenhouse gas mainly includes carbon dioxide (CO₂), methane (CH₄), nitrous oxide (N₂O), hydrofluorocarbons (HFCs), perfluorocarbons (PFCs), sulfur hexafluoride (SF₆), nitrogen trifluoride (NF₃), etc. The increase of these gases is mainly a result of human activities such as burning fossil fuel, industrial manufacturing, and agricultural activities which can lead to global warming, extreme weather events, rising sea levels, etc., leading to a serious impact on humanity and the ecosystem.

To achieve goals such as net-zero carbon reduction and carbon neutrality, enterprises in various countries need to effectively conduct product carbon footprint inventories and establish carbon reduction strategies. Product carbon footprint refers to greenhouse gas emissions generated from life cycle stages of a product such as raw material acquisition, manufacturing, distribution and sales, use and disposal; or the greenhouse gas emissions generated from life cycle stages of a service such as the raw material acquisition, service and disposal that are converted to a sum of carbon dioxide equivalents.

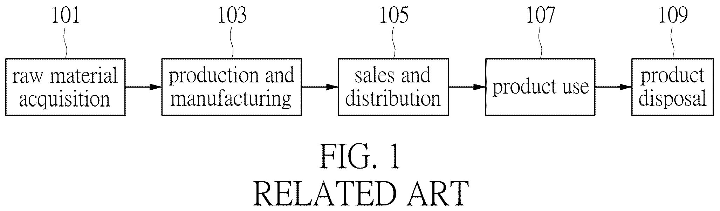

FIG. 1 is a schematic diagram of a procedural flow of a product carbon footprint being formed, which represents the processes in which an industrial product emits greenhouse gases from production to disposal; for example, in the upstream supply chain, greenhouse gases will be emitted during raw material acquisition 101 and production and manufacturing 103, and in the downstream supply chain, greenhouse gases will be emitted during sales and distribution 105 in which products are delivered to users, as well as during a product use 107. Further, greenhouse gases will also be emitted during a final product disposal 109.

After the carbon footprint inventory, tools can be used to calculate the greenhouse gas emissions of the entire manufacturing process. Emission coefficients will be set according to the different levels of carbon emissions at different stages in the manufacturing process. Therefore, the raw materials used at each stage can be multiplied by the emission coefficients in order to calculate carbon emissions.

After the amount of carbon emission in the carbon footprint is calculated, one of the most important tasks is to perform carbon emission reduction. The enterprise currently relies on a carbon emission management platform or entrusts a service provider to perform carbon footprint inventory and carbon emission calculation. However, the conventional carbon emission management platform mostly uses a static report to present a result of carbon inventory and only allows users to query the carbon emission data. The conventional carbon emission management platform lacks a function of actively analyzing the physical carbon emission hotspots and a function of recommending a corresponding carbon emission reduction method. The conventional carbon asset management platform still heavily relies on human judgment and assistance of an external consultant to perform carbon asset management.

In addition, the current system lacks integration capabilities and comparison with an external database. For example, even though the external database is abundant with energy-saving equipment information, alternative information of raw materials (including fuel materials) and many reduction plans, it requires users to manually search, compare and evaluate feasibility and cost-effectiveness of these reduction plans. Since operating process of the current system is cumbersome and easy to miss information, the above-mentioned conventional process is not only time-consuming, and increases operating costs, but is also disadvantageous for enterprises to promote carbon reduction and comply with requirements based on government policies, which can negatively impact an overall time effectiveness and accuracy of the system.

### SUMMARY OF THE INVENTION

In view of the conventional technology lacking a platform capable of providing an effective solution for carbon emission reduction for an enterprise after carbon inventory and carbon emission calculation, provided in the present invention is a carbon emission reduction plan recommendation system and a method, in which a service platform is provided for automatically providing an effective carbon emission reduction plan based on the carbon inventory data and requirements submitted by the enterprise. The service platform can therefore provide multiple recommended solutions for the enterprise to select and to adopt.

In certain embodiments of the present invention, a computer-implemented serving system and an application system are provided, in which the serving system recommends a carbon emission reduction plan based on the carbon emission data and the carbon emission reduction requirement submitted by a user. After that, the serving system relies on data stored in the carbon asset database and the reduction method database to perform carbon emission hotspot analysis and integrates the carbon asset data and the reduction method data into an input data of the application system.

The recommendation list of carbon emission reduction plans includes one or more carbon emission reduction plans. In the application system, the one or more carbon emission reduction plans are ranked according to a unit abatement cost, a difficulty of implementation and a return on investment for forming a ranked recommendation list of carbon emission reduction plans.

The computer system is configured to perform the carbon emission reduction plan recommendation method, in which the serving system utilizes a computer technology to integrate the carbon emission data internally and externally of the user, and conduct carbon emission hotspot analysis. Further, the system utilizes a statistical method and an artificial intelligence algorithm to identify one or more carbon emission hotspots operated by the user and retrieve information of the one or more carbon emission hotspots. Next, any of the one or more carbon emission hotspots is configured to match with every available reduction measure obtained from the reduction method database. Further, the serving system is configured to estimate effectiveness and cost of carbon emission reduction according to the carbon emission reduction requirement submitted by the user and then obtain a matching result by querying the reduction method database so as to generate a recommendation list of carbon emission reduction plans.

Further, the serving system includes a carbon asset database and the reduction method database. The carbon asset database stores the carbon emission data submitted by at least one user. The carbon emission data includes carbon inventory data and carbon footprint data. Still further, the reduction method database stores reduction method data having reduction methods, equipment specifications, raw and fuel materials and alternative technical data published by at least one external system from government, academics and private institutions.

Further, the serving system connects with at least one carbon asset management digital platform via a network by a communication module for acquiring carbon emission data and/or at least one carbon asset management report via an application programming interface so as to acquire the carbon inventory data and/or carbon footprint data of the user.

Further, the serving system obtains the carbon emission reduction method, the equipment specifications, raw and fuel materials and alternative technical data are obtained from at least one external system via an application programming interface by a communication module via a network.

Next, the serving system performs carbon emission hotspot analysis based on the data stored in the carbon asset database and the reduction method database. The carbon asset data and reduction method data are integrated to be an input data for an application system.

The above ranked recommendation list of carbon emission reduction plans is provided for a user to select one of the plans to be performed.

The user selects one of the carbon emission reduction plans in the recommendation list of carbon emission reduction plans via a user operating interface, and a simulation result is presented by visualizing the user-selected carbon emission reduction plan.

Still further, the process for establishing the reduction method database by the serving system includes obtaining one or more carbon emission reduction methods that include specifications of equipment that produces carbon emission, a working process, data of raw and fuel materials and the alternative technical data. The carbon emission reduction methods are then translated for establishing the reduction method database.

Further, in the application system, carbon emission reduction is performed using a user-selected carbon emission reduction plan, and the application system continuously tracks carbon emission reduction effectiveness.

### BRIEF DESCRIPTION OF THE DRAWINGS

The described embodiments may be better understood by reference to the following description and the accompanying drawings, in which:
Fig. 1 is a flowchart illustrating an example of a conventional process for forming product carbon footprint;
Fig. 2 is a block diagram illustrating a computer-implemented carbon emission reduction plan recommendation system according to one embodiment of the present invention;
Fig. 3 is a schematic diagram illustrating the carbon emission reduction plan recommendation system according to one embodiment of the present invention;
Fig. 4 is a block diagram depicting a serving system of the carbon emission reduction plan recommendation system according to one embodiment of the present invention;
Fig. 5 is a schematic diagram depicting an application system of the carbon emission reduction plan recommendation system according to one embodiment of the present invention; and
Fig. 6 is a flowchart illustrating a carbon emission reduction recommendation method according to one embodiment of the present invention.

### DETAILED DESCRIPTION OF THE EXEMPLARY EMBODIMENTS

The present invention relates to a carbon emission reduction plan recommendation system and a method. The system utilizes a computer technology to implement a platform. The method uses a computer technology to apply a relational data structure and an artificial intelligence (AI) technology to analyze carbon emission data and information of related equipment and raw materials that are submitted by an enterprise via the platform. One or more carbon emission hotspots of the enterprise can be obtained. A recommendation list of carbon emission reduction plans can be obtained based on the requirements submitted by the enterprise and effectiveness and cost of carbon emission reduction. The recommendation list allows the enterprise to select a suitable carbon emission reduction plan.

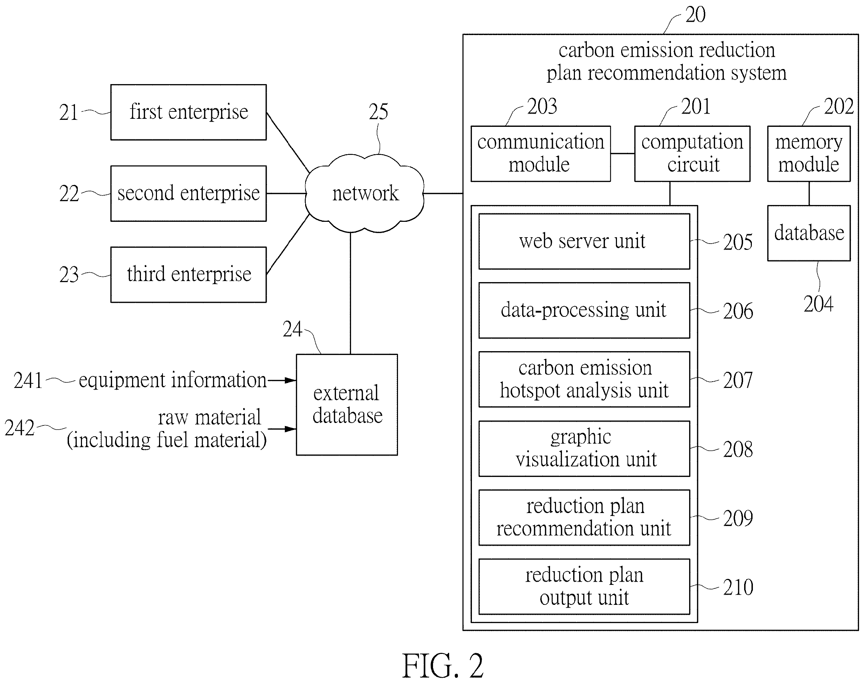

Reference is made to Fig. 2, which is a block diagram illustrating a computer-implemented carbon emission reduction plan recommendation system according to one embodiment of the present invention. The carbon emission reduction plan recommendation system implements a network platform that performs the carbon emission reduction recommendation method through collaboration of software and hardware (e.g., a computation circuit, a memory and a communication circuit, etc.) for providing the recommendation list of carbon emission reduction plans.

Fig. 2 shows a computer-implemented server host that operates a carbon emission reduction plan recommendation system 20. The hardware components of the server host include a computation circuit 201, a memory module 202 and a communication module 203 that are electrically interconnected. These hardware components are collaboratively operated with the software so as to implement the circuits and function elements. For example, the memory module 202 acts as a storage that implements a database 204 and various function elements that are implemented by the computation circuit 201 while performing software programs. The function elements are such as a web server unit 205, a data-processing unit 206, a carbon emission hotspot analysis unit 207, a graphic visualization unit 208, a reduction plan recommendation unit 209 and a reduction plan output unit 210.

The carbon emission reduction plan recommendation system 20 implements a platform that provides users (e.g., a first enterprise 21, a second enterprise 22 and a third enterprise 23, including the users with carbon emission reduction requirements) with carbon emission management. The web server unit 205 operates a web server that allows the users to access resources of computation and storage of the carbon emission reduction plan recommendation system 20 via a network 25. The users can submit their carbon emission data to the web server via a webpage or a specific application. In addition to the carbon emission data that the users establish, the system also acquires data from an external database 24 via the network 25. The external database 24 includes equipment information 241 and raw materials (e.g., fuel materials) 242 of the enterprise. The carbon asset data is created in the carbon emission reduction plan recommendation system 20. After that, the data-processing unit 206 of the carbon emission reduction plan recommendation system 20 is configured to integrate and process the carbon emission data, and the carbon emission hotspot analysis unit 207 conducts hotspot analysis. An order of the carbon emission hotspots can be obtained by ranking the various carbon emission sources inside the enterprise based on amounts of carbon emissions. Accordingly, a recommendation list of the carbon emission reduction plans is established according to an order of the ranked carbon emission hotspots. Finally, the graphic visualization unit 208 provides a graphic chart of carbon emission hotspots to the users for their reference, for example, a report that is proprietary to the first enterprise 21, the second enterprise 22 or the third enterprise 23.

After that, the reduction plan recommendation unit 209 of the carbon emission reduction plan recommendation system 20 is used to obtain various carbon emission reduction plans and sets up one or more reduction plans according to requirements of the user. A recommendation list of the carbon emission reduction plans is created. The reduction plan output unit 210 outputs the recommendation list to the user. The carbon emission reduction plan recommendation system 20 can establish a carbon emission reduction database in advance and then perform matching with the user's requirements according to one or more carbon emission hotspots that are analyzed based on the data submitted by the user (e.g., a first enterprise 21, a second enterprise 22 or a third enterprise 23) and the requirements of the user. The requirements submitted by the user are such as a carbon emission target and budgets. The matching performed by the system results in the recommendation list of the carbon emission reduction plans customized for the user. It should be noted that the carbon emission target set by the enterprise can be based on the targets set by countries, international organizations, requests made by supply chain and/or user-defined targets. The budgets are set based on a cost including manpower, resources and financial costs when performing one of the carbon emission reduction plans.

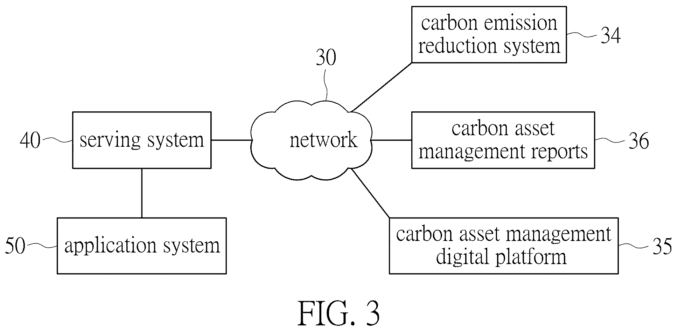

Based on the computer-implemented system illustrated in Fig. 2, reference is further made to Fig. 3, which is a schematic diagram depicting a platform framework operating the carbon emission reduction plan recommendation system according to one embodiment of the present invention. The carbon emission reduction plan recommendation system constitutes an analysis and recommendation mechanism that integrates internal and external carbon emission data and equipment data sources through a network platform. The carbon emission reduction plan recommendation system is able to provide recommendation of carbon reduction plans for each of the carbon emission hotspots of the enterprise. Further, a visualization interface is provided for allowing the decision maker to instantly acknowledge carbon reduction effectiveness and situation of resource input.

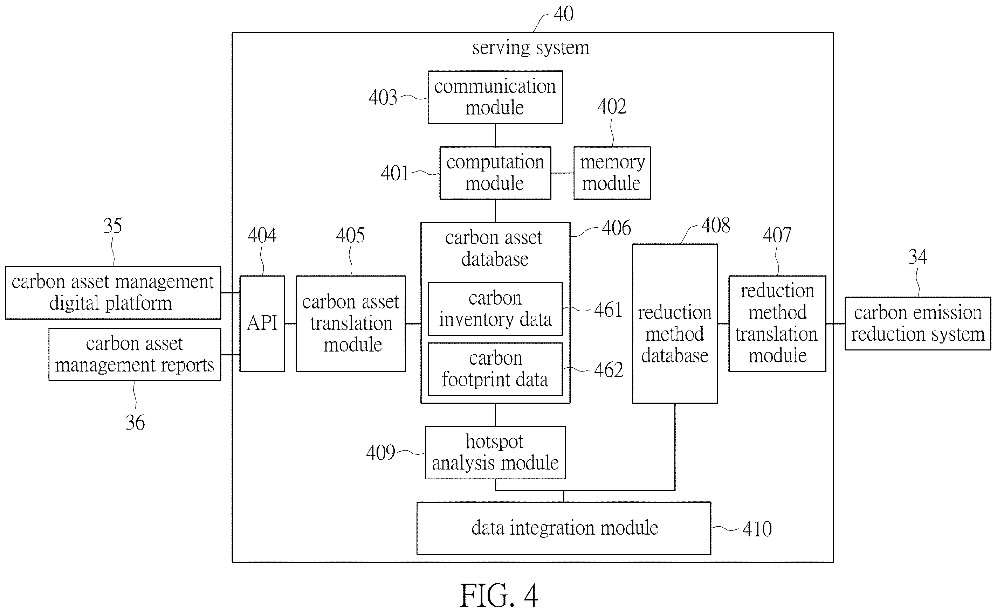

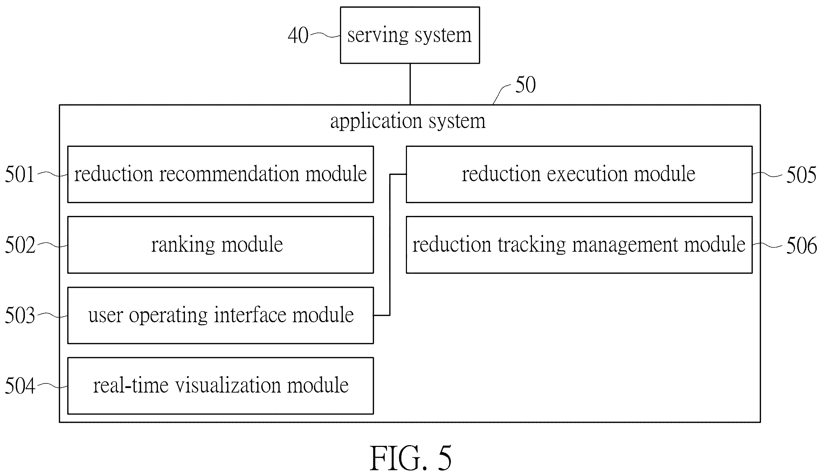

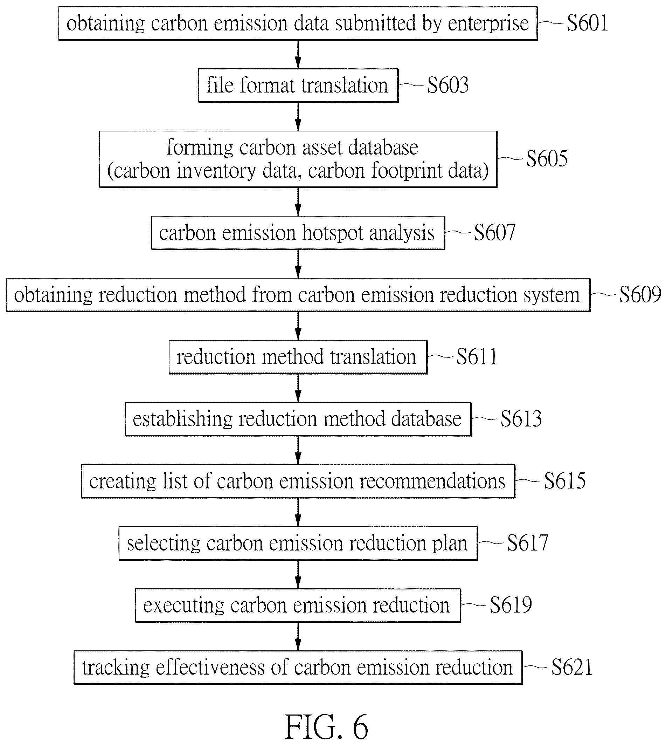

The carbon emission reduction plan recommendation system utilizes computer and network communication technology to implement a service system 40 for providing recommendation of carbon emission reduction plans and an application system 50 that conducts carbon emission reduction under the platform framework. References are made to Fig. 4 that is a block diagram depicting function modules of the serving system 40 that are implemented through collaboration of software and hardware, Fig. 5 that is another block diagram depicting function modules of the application system 50 that are also implemented through collaboration of software and hardware, and Fig. 6 that is a flowchart illustrating the carbon emission reduction recommendation method according to certain embodiments of the present invention. The system is characterized in that it is able to analyze at least two types of data sourcing from carbon asset data and reduction plan data and conduct recommendations. Further, the system can significantly reduce burden of the manpower managing carbon emission through the integration scheme and intelligent recommendation performed by the carbon emission reduction plan recommendation system. Therefore, decision efficiency and accuracy for carbon reduction can be improved for industrial applications with high potential.

According to one embodiment of the present invention, as Fig. 3 shows, the serving system 40 of the carbon emission reduction plan recommendation system receives the carbon emission data submitted by a user (e.g., the first enterprise 21, the second enterprise 22 or the third enterprise 23 shown in Fig. 2, or any user with need of carbon reduction) via a user interface over a network 30. The serving system 40 also receives carbon reduction targets and carbon emission reduction requirements set by the user with consideration to the need of carbon reduction and cost (step S601, Fig. 6). The carbon emission data includes the carbon emission data that is submitted by the user and created in a specific carbon asset management digital platform 35 and/or carbon asset management reports 36. The carbon emission data also at least includes equipment information and raw material data used for operations of the enterprise.

The serving system 40 can be referred to the computer-implemented system framework schematically shown in Fig. 4 according to one embodiment of the present invention. Main circuit components of the computer system implementing the serving system 40 of the carbon emission reduction plan recommendation system include a computation module 401, a memory module 402 and a communication module 403. The memory module 402 is such as a non-transitory computer-readable medium. The computation module 401 of the computer system executes an instruction set stored in the memory module 402 to perform the carbon emission reduction recommendation method. A database such as the carbon asset data 406 and the reduction method database 408 setting in the serving system 40 is also established by the memory module 402. The carbon asset database 406 is used to store the carbon asset data of at least one user (e.g., an enterprise). The carbon asset data includes a carbon inventory data 461 and a carbon footprint data 462. The reduction method database 408 is used to store the reduction method data obtained from at least one external system and can be published by government, academic or private institutions. The external system can be represented by a carbon emission reduction system 34 shown in the diagram. The reduction method data includes a reduction method, equipment specifications, raw and fuel materials and alternative technical data.

The serving system 40 connects with at least one carbon asset management digital platform 35 and/or carbon asset management reports 36 by the communication module 403 via an application programming interface (API) 404 over network so as to acquire the user's carbon inventory data 461 or carbon footprint data 462. Similarly, the serving system 40 connects with the carbon emission reduction system 34 by the communication module 403 via the API over the network for acquiring the reduction methods, equipment specifications and raw and fuel material data and alternative technical data from the external system. Therefore, the serving system 40 performs analysis on the carbon emission hotspots and integrates the carbon asset data and the reduction method data that are regarded as an input data for the application system 50.

Thus, the carbon emission data submitted by the user can be retrieved from the carbon asset management digital platform 35 and/or the carbon asset management reports 36 via an application programming interface 404 of the serving system 40. The carbon emission data can be firstly processed with file format translation by the carbon asset translation module 405, by which the carbon emission data in different formats from different platforms or different reports can be formatted, including part of synonym identification and adjustment. Therefore, the terminologies can be unified (step S603, Fig. 6). Next, the carbon asset database 406 having the carbon inventory data 461 and the carbon footprint data 462 with respect to different users can be respectively established (step S605, Fig. 6).

Afterwards, in the serving system 40, a hotspot analysis module 409 performs carbon emission hotspot analysis according to the received carbon inventory data 461 and the carbon footprint data 462. In certain embodiments, a computer technology is used to integrate internal data of the user (e.g., the data of the carbon asset management platform) and data of the external database (e.g., the equipment information and raw and fuel materials) for the carbon emission hotspot analysis. A statistical method and an artificial intelligence algorithm are used to identify the one or more carbon emission hotspots of the user. The carbon emission hotspot can be a specific device, materials and/or one or more working processes. After that, the data of the carbon emission hotspots of the user can be obtained (step S607, Fig. 6).

Next, the carbon emission reduction plan recommendation system acquires carbon emission reduction methods from the carbon emission reduction system 34 through the serving system 40 or via a specific API (step S609, Fig. 6). According to one of the embodiments of the present invention, the serving system 40 obtains the carbon emission reduction methods from an external system. The external system studies the specifications of equipment, the one or more working processes, raw and fuel materials and alternative schemes that are supposed to emit carbon compounds and designs various carbon emission reduction methods in compliance with various environmental protection regulations. In the serving system 40, a reduction method translation module 407 translates the carbon emission reduction methods obtained from the carbon emission reduction system 34 into applicable contents for the serving system 40 (step S611, Fig. 6), and then the carbon emission reduction methods form a reduction method database 408 that can be implemented by the memory module 402 or any storage device (step S613, Fig. 6). The reduction method database 408 stores at least one carbon emission reduction method, specifications of equipment of each manufacturer, information of raw and fuel materials of each manufacturer, and alternative technical data of each manufacturer from at least one external system. A data integration module 410 then integrates the carbon asset data and the reduction methods.

The serving system 40 accordingly establishes the carbon asset database 406 and is able to perform carbon emission hotspot analysis. Further, the serving system 40 establishes the reduction method database 408 based on the external data and uses the data integration module 410 to match each of the carbon emission hotspots of the user with the available reduction measures of the reduction method database 408. The carbon emission reduction requirement submitted by the user are also considered in the matching process so as to estimate the effectiveness and cost of carbon emission reduction. One of the main objectives is to form a most cost-effective carbon emission reduction plan. Thus, a final recommendation list of carbon emission reduction plans can be automatically created based on the matching result when querying the reduction method database 408 to match the carbon emission reduction requirement requested by the user (step S615, Fig. 6).

In certain embodiments of the present invention, the carbon emission reduction plan recommendation system embodies the application system 50 that performs the carbon emission reduction methods. The application system 50 connects with the serving system 40. The application system 50 also connects with the data integration module 401 by its communication module over the network so as to acquire data of the integrated hotspots and the reduction method data, by which the application system 50 can proceed the following carbon emission reduction applications.

According to one embodiment of the application system 50 shown in Fig. 4, the application system 50 implements the reduction recommendation module 501, the ranking module 502, the user operating interface module 503, the real-time visualization module 504, the reduction execution module 505 and the reduction tracking management module 506 through collaboration of software and hardware.

It should be noted that the reduction recommendation module 501 has high flexibility and therefore is able to rely on different industrial characteristics and users' requirements to expand data sources and to recommend algorithms. Next, the ranking module 502 performs a ranking mechanism to generate the recommendation list of carbon emission reduction plans automatically.

Afterwards, the one or more carbon emission reduction plans recorded in the recommendation list can be ranked based on unit abatement cost, difficulty of implementation and return on investment and so on to form the recommendation list having ranked carbon emission reduction plans. The recommendation list assists the user, e.g., the enterprise decision maker, to accurately select one of the carbon emission reduction plans (step S617, Fig. 6). It is worth noting that, when the multiple carbon emission reduction plans in the recommendation list are ranked, a carbon reduction potential of each of the carbon emission reduction plans can be considered for performing multi-dimensional ranking having the factors such as execution cost and payback period. Further, the system can dynamically visualize the changes of carbon emission in a graphical manner for strengthening decision-making efficiency and carbon reduction action.

Next, the user can select one of the reduction plans to be performed from the recommendation list via a user operating interface initiated by the user operating interface module 503 of the application system 50. For example, the user operating interface module 503 provides the options of the carbon emission reduction plans for the user to make a selection by checking, screening and ranking via the user operating interface. In the meantime, the carbon emission reduction plan recommendation system provides technical details and assessment summary to be checked so as to simulate the different carbon emission reduction plans and support synchronous simulations of the carbon emission reduction plans. Afterwards, the application system 50 can visualize the simulation in real time by the real-time visualization module 504. The visualized graphs can be a waterfall chart that can reveal the simulation result according to the user's selection. The visualized graphs can be used reveal potential of carbon reduction, input cost and target achievement. The visualized graphs allow the user to acknowledge the trend of carbon emission and expenditure planning. The reduction execution module 505 performs carbon emission reduction according to the carbon emission reduction plan selected by the user (step S619, Fig. 6). The application system 50 can continuously track the effectiveness of carbon emission reduction by a software sequence operated in the reduction tracking management module 506 in view of the carbon emission reduction data submitted by the user (step S621, Fig. 6).

According to the above embodiments respectively relating to the serving system 40 of Fig. 4 and the application system 50 of the Fig. 5 of the carbon emission reduction plan recommendation system, the serving system 40 achieves services of carbon emission hotspot analysis and integration of carbon asset data and reduction method data through collaboration of computers, software and network technologies. To analyze the one or more carbon emission hotspots of the enterprise, some specific algorithms performed in the serving system 40 are configured to analyze the carbon asset data including the inventory data and the carbon asset data retrieved from the carbon asset management digital platform and/or carbon asset management reports. After that, the carbon asset data is integrated with the reduction method data. The application system 50 achieves recommendation, ranking, visualization, execution and tracking management of the carbon emission reduction plan(s) through collaboration of the computer technology, the software and the network technology. The algorithms performed in the serving system 40 are configured to recommend one or more carbon emission reduction plans based on the data outputted by the data integration module 410. The application system 50 performs the carbon emission reduction plan that is selected by the user according to a multi-dimensional ranking that is based on unit abatement cost, difficulty of implementation and return on investment, etc.

In one embodiment of the present invention, the application system 50 can perform carbon emission reduction simulation, present a corresponding simulation result, and use graphs to visualize an original carbon emission, individual contribution of each of the items in the carbon emission reduction plan, a final simulated total carbon emission, and whether a reduction target is achieved. The graphs can be updated in real time according to the items checked by the user, and reports are outputted. The reduction execution module 505 can be used to review details while performing carbon emission reduction. The reduction tracking management module 506 is used to manage the service of carbon emission reduction and track a progress of carbon emission reduction by the reduction tracking management module 506.

In certain embodiments of the present invention, as Fig. 4 shows, the serving system 40 connects with at least one carbon asset management digital platform 35 over the network so as to acquire organization inventory data of greenhouse gases as shown in Table 1. The inventory data covers the organization greenhouse gases in all of the categories, such as a first category including direct greenhouse gas emission, a second category including indirect greenhouse gas emission, and a third category including other indirect greenhouse gas emission. The greenhouse gas defined in each of the categories is referred to for obtaining a corresponding organization greenhouse gas inventory and the product carbon footprint information in Table 2. The carbon inventory can be conducted for the enterprise by collecting data with questionnaires, etc. In certain embodiments of the present invention, the questionnaires are referred to for implementing the carbon asset management reports through spreadsheets. The serving system 40 can obtain the data of organization greenhouse gas inventory and product carbon footprint via an application programming interface 404 by the communication module 403. Thus, the serving system 40 can translate the carbon asset data to be the data stored to the carbon asset database 406 by the carbon asset translation module 405.

**Table 1:**

| Classes | | Emission source items | Emission coefficient | | Total carbon emission | |
|---|---|---|---|---|---|---|
| | | Total emission source items | Emission coefficient | Unit | Emission | Unit |
| Class 1- Direct greenhouse gases emission and removal | | | | | | |
| | Class 1.1-fixed fuel source | 12 | | | 35.1220 | tons CO2e |
| | boiler-fuel oil-diesel fuel | 3 | 2.6060317920 | Kg/L | 13.9975 | tons CO2e |
| | diesel fuel generator-fuel oil-diesel fuel | 4 | 2.6060317920 | Kg/L | 14.8700 | tons CO2e |
| | ... | ... | ... | ... | ... | |
| | Class 1.2-movement fuel source | 15 | | | 34.2400 | tons CO2e |
| | official vehicle - fuel oil -Motor gasoline | 4 | 2.2631328720 | Kg/L | 9.9081 | tons CO2e |
| | ... | ... | ... | ... | ... | tons CO2e |
| | Class 1.3-manufacturing process emission source | 13 | | | 13.2000 | tons CO2e |
| | welding equipment - Acetylene | 6 | 3.3846153846 | ton/ton | 9.4486 | tons CO2e |
| | ... | ... | ... | ... | ... | tons CO2e |
| | Class 1.4-dissipation of emission source | 6 | | | 108.1500 | tons CO2e |
| | chiller | 5 | 1 | Kg/Kg | 87.3000 | tons CO2e |
| | official vehicle | 1 | 1 | Kg/Kg | 20.8500 | tons CO2e |
| | Class 1.5-Land use, Land use change and Forestry | 0 | | | 0.0000 | tons CO2e |

| Class 2- input power indirect greenhouse gases emission | | | | | | |
|---|---|---|---|---|---|---|
| | Class 2.1-purchased power | 1 | | | 45.000 | tons CO2e |
| | ... | ... | ... | ... | ... | tons CO2e |
| | Class 2.2-purchased power source | 1 | | | 10.000 | tons CO2e |
| | ... | ... | ... | ... | ... | tons CO2e |

| Class 3-transporation generated indirect greenhouse gases emission | | | | | | |
|---|---|---|---|---|---|---|
| | Class 3.1-upstream transportation and distribution | 5 | | | 23.0000 | tons CO2e |
| | ... | ... | ... | ... | ... | tons CO2e |
| | Class 3.2-downstream transportation and distribution | 5 | | | 43.0000 | tons CO2e |
| | ... | ... | ... | ... | ... | tons CO2e |
| | Class 3.3-employee commuting | 5 | | | 3.0000 | tons CO2e |
| | ... | ... | ... | ... | ... | tons CO2e |
| | Class 3.4-business travel | 5 | | | 1.5000 | tons CO2e |
| | ... | ... | ... | ... | ... | tons CO2e |
| | Class 3.5-guest commuting | 5 | | | 0.1230 | tons CO2e |
| | ... | ... | ... | ... | ... | tons CO2e |

| Class 4- indirect greenhouse gases emission of organization product | | | | | | |
|---|---|---|---|---|---|---|
| | Class 4.1-purchasing product or service | 5 | | | 52.0000 | tons CO2e |
| | ... | ... | ... | ... | ... | tons CO2e |
| | Class 4.2-activity relating to fuel and energy | 40 | | | 12.0000 | tons CO2e |
| | ... | ... | ... | ... | ... | tons CO2e |
| | Class 4.3- waste disposal produced by operation | 4 | | | 5.0000 | tons CO2e |
| | ... | ... | ... | ... | ... | tons CO2e |
| | Class 4.4-upstream procurement of capital goods | 5 | | | 1.5000 | tons CO2e |
| | ... | ... | ... | ... | ... | tons CO2e |
| | Class 4.5-upstream leased assets | 0 | | | 0.0000 | tons CO2e |

| Class 5- indirect greenhouse gases emission while using organization product | | | | | | |
|---|---|---|---|---|---|---|
| | Class 5.1- using sale product | 0 | | | 0.000 | tons CO2e |
| | Class 5.2-processing of sale product | 0 | | | 0.0000 | tons CO2e |
| | Class 5.3-waste disposal of sale product | 4 | | | 21.0000 | tons CO2e |
| | ... | ... | ... | ... | ... | tons CO2e |
| | Class 5.4-downstream leased assets | 0 | | | 0.0000 | tons CO2e |
| | Class 5.5-franchise and franchising | 0 | | | 0.0000 | tons CO2e |
| | Class 5.6-investment | 0 | | | 0.0000 | tons |

| Class 6- indirect greenhouse gases emission from other sources | | | | | | |
|---|---|---|---|---|---|---|
| | Class 6.1-others | 0 | | | 0.0000 | tons CO2e |

**Table 2:**

| work order produ ction date | finished product material number | producti on quantity of semifinished work order | work order proces sing time (min) | allocatio n ratio | total carbon emission | carbon emission (KgCO2e ) | carbon emission coefficie nt (KgCO2e /each) |
|---|---|---|---|---|---|---|---|
| 2023M0 1 | FG00001 | 25 | 298.80 | 15.85% | 35 | 5.54668 6 | 0.22186 7 |
| 2023M0 1 | FG00002 | 35 | 350.30 | 18.58% | | 6.50269 2 | 0.18579 1 |
| 2023M0 1 | FG00003 | 32 | 323.14 | 17.14% | | 8399851 5 | 0.18745 3 |
| 2023M0 1 | FG00004 | 16 | 234.12 | 12.42% | | 4.34601 8 | 0.27162 6 |
| 2023M0 1 | FG00005 | 16 | 215.32 | 11.42% | | 3.99703 | 0.24981 4 |
| 2023M0 1 | FG00006 | 15 | 232.32 | 12.32% | | 4.31260 4 | 0.28750 7 |
| 2023M0 1 | FG00007 | 23 | 231.45 | 12.28% | | 4.29645 4 | 0.18680 2 |

Taking a chiller as an example, according to one embodiment of the carbon emission reduction plan recommendation system of the present invention, the hotspot analysis module 409 of the serving system 40 of Fig. 4 identifies the chiller as a high-emission equipment and the serving system 40 automatically connects with the reduction method database 408 for searching for all carbon reduction technologies and equipment alternatives relating to the chiller. One of the equipment alternative is a chiller with a higher efficiency or an energy-saving control model.

Through calculation of artificial intelligence technology, the serving system 40 can generate a recommendation list of carbon emission reduction plans relating to the chiller and also the information of an estimated amount of carbon reduction, an implementation cost and a recycling period of each of the plans. The user can check and select one of the plans according to ranking conditions such as prioritizing the plan with a lowest unit reduction cost. The serving system 40 then updates the waterfall chart in response to the selected plan, reveals the amount of carbon reduction that the selected plan can produce, the contribution to annual goals, and the required costs for investment.

According to a result of carbon emission hotspot analysis of the present example, if one of the carbon emission hotspots is an original raw fuel such as fuel diesel of a boiler, the serving system 40 recommends an alternative fuel (e.g., natural gas or a biomass energy, etc.) obtained from an external database and estimates an emission difference and cost change using the alternative fuel for the user to make selection and conduct simulation.

In one further embodiment of the present invention, Al-implemented intelligent control technologies are introduced for reducing usage of energy. For example, optimizing operating parameters for air conditioning systems is one of the AI-implemented intelligent control technologies. The system recommends a feasible solution and calculates energy saving potential based on compatibility between the equipment specifications and the energy-saving control model. The carbon emission reduction recommendation method of the present invention can be applied to various industries and various types of equipment, and improve the timeliness, scientificity and operational convenience of carbon emission management through the reduction method with most effectiveness that is recommended based on the practical data.

When one of the carbon emission reduction plans is selected by the user from the recommendation list, the reduction execution module 505 of the application system 50 provides execution steps with respect to the selected carbon emission reduction plan, suppliers' information and an estimated schedule. The application system 50 automatically assesses feasibilities of the execution steps of the selected reduction plan and provides suggestions of the schedule for the enterprise to schedule construction time sequences and resource allocations according to the budgets and a construction period that the user inputs. Further, for the selected reduction plan that requires multi-stage processes or cooperation of multiple units (e.g., large boiler replacement and plant energy integration), the reduction execution module 505 is used to set up characters of division of labor and perform milestone management, and multiple tasks of division of labor are assigned to different user accounts via a system interface for facilitating cross-department or cross-plant collaboration.

Still further, after the selected reduction plan is performed in the application system 50, the reduction tracking management module 506 establishes a corresponding tracking record form that is used to automatically receive operating data of equipment, records of usage of energies or other data relating to carbon emission calculation. The data in the tracking record form can be compared with an expected reduction target. The reduction tracking management module 506 also provides support for the user (or an operator) to manually fill in progress such as a project completion percentage, a budget usage ratio or technical problems being encountered in reports. If deviations between actual reduction outcomes and predicted outcomes are too large, the carbon emission reduction plan recommendation system of the present invention will automatically issue a reminder for assisting the operator to initiate an adjustment mechanism or hold a review conference.

Thus, a carbon-emission reduction plan including recommendation, execution, tracking and optimization is ensured to form a complete closed-loop management process through operations of the reduction execution module 505 and the reduction tracking management module 506 of the application system 50, so that systematicness and capabilities of continuous improvement for carbon emission management can be strengthened.

The example shown below shows an implementation example of the carbon emission reduction plan recommendation system receiving carbon emission data from the user. The carbon emission data being formatted can be shown in the following list. The list shows various tables and attached forms in the carbon emission data. Some exemplary examples are as follows, such as Table 3 being indicative of emission source identification, Table 4 being indicative of activity data, Table 7 being indicative of uncertainty quantification assessment, and appendix 2 being indicative of warning potential (GWP).

An example of the list:

| Table number | Table Name | Filling Guideline | Synopsis |
|---|---|---|---|
| Table 1 | Basic business data | ⊚ | Including: inventory year, basic data, inventory and verification information |
| Table 2 | Boundary setting | ⊚ | Including: certificate number, address and emission sources not included in the calculation within a boundary issued by competent authority of principal business |
| Table 3 | Emission source | ⊚ | including: identification data of all |
| | Identification | | emission sources within the boundary |
| Table 4 | Activity data | ⊚ | Including: facility emission source activity data, sources and the like |
| Table 5 | Quantitative inventory | ⊚ | Including: facility emission source emission coefficient and sources, GWP and calculation of emission |
| Table 6 | Data quality management | △ | provide control operations such as inventory data quality management for enterprises, mainly using items of activity data, emission coefficient and instrument calibration to perform data quality grading management and evaluation |
| Table 7 | Uncertainty quantitative assessment | △ | provide uncertainty quantitative assessment for enterprises, mainly using uncertain sources of activity data and emission coefficient |
| Table 8 | Greenhouse gas emission summary | ⊚ | summarize each class of greenhouse gases, emission and proportions of emission, enterprise data quality management and uncertainty assessment result for current year |
| Table 9 | plant power and steam supply and demand | ⊚ | Fill in plant' s power and steam production and supply situation |
| Table 10 | total plant non-energy product output and production schedule | ⊚ | Fill in plant' s non-energy product yield and production schedule |
| Table 11 | testing method and testing date | ⊚ | Fill in calorific value or carbon content of raw (fuel) materials or products used in a quantification process of plant's emission sources |
| Attached | published | △ | Adapted to items after (including) |
| Table 1 | greenhouse gases emission coefficient | | 2024 inventory, providing 2024/02/05 published greenhouse gases emission coefficient, IPCC 2006 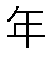 fuel combustion 95% Confidence Interval uncertainty % |
| Attached Table 2 | warning Potential (GWP) | △ | Table 4 of published greenhouse gases emission coefficient, Warning Potential (GWP), including: IPCC 2013 published hybrid refrigerant GWP. |
| Attached Table 3 | postal code | △ | domestic land information |
| Attached Table 4 | industry classification table | △ | Industry code and corresponding name |
| Attached Table 5 | process classification | △ | manufacturing process code and corresponding name |
| Attached Table 6 | equipment classification table | △ | equipment code and corresponding name |
| Attached Table 7 | raw and fuel materials or product classification table | | raw and fuel materials or product code and corresponding name |

**Emission source identification (Table 3):**

| Process No. | Process code | equip ment No. | equip ment name | Raw (fuel) materia l or produc t type | Raw (fuel) materia l or produc t code | Raw (fuel) materia I or produc t name | Produc e CO₂ | Produc e CH₄ |
|---|---|---|---|---|---|---|---|---|
| G01 | 000999 | GM01 | diesel engine | 1.raw and fuel materia ls | 170006 | diesel fuel | v | v |
| G02 | 000999 | GM02 | gasolin e engine | 1.raw and fuel materia ls | 170099 | other gasolin e | v | v |
| G03 | G2090 2 | GM03 | other cutting facilitie s | 1.raw and fuel materia ls | 180191 | Acetyle ne | v | |
| M01 | 350001 | E212 | oil boiler | 1.raw and fuel materia ls | 170019 | Fuel oil No. 4-6 | v | v |
| M02 | 350001 | E213 | gas boiler | 1.raw and fuel materia ls | 050002 | Natural gas | v | v |
| G04 | G2090 0 | GV01 | gasolin e engine | 1.raw and fuel materia ls | 170001 | Motor gasolin e | v | v |
| G04 | G2090 0 | GV02 | gasolin e engine | 1.raw and fuel materia ls | 170001 | Motor gasolin e | v | v |
| G03 | G2090 1 | GF01 | firefigh ting facilitie s | 1.raw and fuel materia ls | 180014 | CO2 | v | |
| G05 | 370009 | GF01 | septic tank | 1.raw and fuel materia ls | GG380 5 | wastew ater treatm ent (BOD) | | v |
| G06 | 000999 | GP01 | other unclass ified facilitie s | 1.raw and fuel materia ls | 350099 | Other power | v | |
| G06 | 000999 | GP02 | other unclass ified facilitie s | 1.raw and fuel materia Is | GG350 2 | REC postin g power usage-bundle d REC HFC-23/R-23 Trifluor ometh ane, CHF3 | v | |
| G06 | 000999 | GP02 | other unclass ified facilitie s | 1.raw and fuel materia ls | GG184 0 | | | |

**Activity data (Table 4):**

| manuf acturi ng proces s numb er | manuf acturi ng proces s code | Name of manuf acturi ng proces S | Facilit y numb er | Facilit y code | Facilit y name | Raw (fuel) materi als or produ cts Class | Raw (fuel) materi al or produ ct code | Raw (fuel) materi al or produ ct name | Direct /Indire ct | Emissi on type |
|---|---|---|---|---|---|---|---|---|---|---|
| G01 | 00099 9 | Other unclas sified manuf acturi ng proces s | GM01 | 0201 | Diesel engin e | 1.raw and fuel materi als | 17000 6 | diesel fuel | Direct | Fixed comb ustion |
| G02 | 00099 9 | Other unclas sified manuf acturi ng proces s | GM02 | 0200 | Gasoli ne engin e | 1.raw and fuel materi als | 17009 9 | Other gasoli ne | Direct | Fixed comb ustion |
| G03 | G2090 2 | Maint enanc e proces s | GM03 | 6099 | Other cuttin 9 faciliti es | 1.raw and fuel materi als | 18019 1 | Acetyl ene | Direct | Dissip ation |
| M01 | 35000 1 | Boiler power gener ation proces s | E212 | 0010 | Fuel coil boiler | 1.raw and fuel materi als | 17001 9 | Fuel oil No. 4-6 | Direct | Fixed comb ustion |
| M02 | 35000 1 | Boiler power gener ation proces s | E213 | 0020 | Gas boiler | 1.raw and fuel materi als | 05000 2 | Natur al gas | Direct | Fixed comb ustion |
| G04 | G2090 0 | Transp ortati on activiti es | GV01 | 0200 | Gasoli ne engin e | 1.raw and fuel materi als | 17000 1 | Motor gasoli ne | Direct | move ment comb ustion |
| G04 | G2090 0 | Transp ortati on activiti es | GV02 | 0200 | Gasoli ne engin e | 1.raw and fuel materi als | 17000 1 | Motor gasoli ne | Direct | move ment comb ustion |
| G03 | G2090 1 | Firefig hting activiti es | GF01 | 9798 | firefig hting faciliti es | 1.raw and fuel materi als | 18001 4 | CO2 | Direct | Dissip ation |
| G05 | 37000 9 | Other waste water treatm ent proces s | GF01 | 9795 | septic tank | 1.raw and fuel materi als | GG38 05 | waste water treatm ent (BOD) | Direct | Dissip ation |
| G06 | 00099 9 | Other unclas sified manuf acturi ng proces s | GP01 | 9999 | Other unclas sified faciliti es | 1.raw and fuel materi als | 35009 9 | Other power | Indire ct | purch ased power |
| G06 | 00099 9 | Other non-classifi ed manuf acturi | GP02 | 9999 | other unclas sified faciliti es | 1.raw and fuel materi als | GG35 02 | REC post power usage bundl | Indire ct | purch ased power |
| | | ng proces s | | | | | | ed REC | | |
| G06 | 00099 9 | Other un-classifi ed manuf acturi ng proces s | GP02 | 9999 | Other unclas sified faciliti es | | GG18 40 | HFC-23/R-23 Trifluo romet hane, CHF3 | Direct | Dissip ation |

**Uncertainty Quantification Assessment (Table 7):**

| Process number | Equipment number | Raw or fuel material or product | | Uncertainty of Activity Data | | |
|---|---|---|---|---|---|---|
| | | | | 95% Lower | 95% Upper | |
| | | Code | Name | Confidence Interval | Confidence Interval | Data Source |
| G01 | GM01 | 170006 | diesel fuel | | | |
| G02 | GM02 | 170099 | Other gasoline | | | |
| G03 | GM03 | 180191 | Acetylene | | | |
| M01 | E212 | 170019 | Fuel oil No. 4-6 | - 1.5% | + 1.5% | |
| M02 | E213 | 050002 | Natural gas | - 0.2% | + 0.2% | |
| G04 | GV01 | 170001 | Motor gasoline | | | |
| G04 | GV02 | 170001 | Motor gasoline | | | |
| G03 | G F01 | 180014 | CO2 | | | |
| G05 | GF01 | GG3805 | Wastewater treatment (BOD) | | | |
| G06 | GP01 | 350099 | Other electricity | - 1.5% | + 1.5% | |

**Continued of Table 7:**

| Greenhouse gas #1 Uncertainty of Emission Coefficient | | | | |
|---|---|---|---|---|
| Greenhouse gas | Greenhouse gas Emission Equivalent (ton CO₂e/yr) | 95% Lower Confidence Interval | 95% Upper Confidence Interval | Coefficient Uncertainty Data Source |
| CO2 | | | | |
| CO2 | | | | |
| CO2 | | | | |
| CO2 | 0.00 | - 2.0% | +0.9% | |
| CO2 | 0.00 | - 2.5% | + 1.8% | |
| CO2 | | | | |
| CO2 | | | | |
| CO2 | | | | |
| CH4 | | | | |
| CO2 | 35,160.58 | - 7.0% | +7.0% | |

**Warning Potential (GWP) (Attached Table 2):**

| Raw (fuel) material or product code | Abbreviation/Common Name/Chemical Name | Warning Potential |
|---|---|---|
| 180014 | CO2, CO2 | 1.000 |
| 180122 | Sulphur hexafluoride, SF6 | 23500.000 |
| 180123 | Nitrogen trifluoride, NF3 | 16100.000 |
| 180176 | Methane (non-petrochemical), CH4 | 30.000 |
| 180177 | Methane (petrochemical), CH4 | 28.000 |
| 190239 | Refrigerant | 0.000 |
| GG1802 | Nitrous oxide, N2O | 265.000 |
| GG1803 | Carbon tetrafluoride (PFC-14), CF4 | 6630.000 |
| GG1804 | Hexafluoroethane (PFC-116), C2F6 | 11100.000 |
| GG1805 | Perfluorohexane (PFC-51-14), n-C6F14 | 7910.000 |
| GG1806 | Perfluoropentane (PFC-41-12), n-C5F12 | 8550.000 |
| GG1807 | Perfluorobutane (PFC-31-10), C4F10 | 9200.000 |
| GG1808 | Octafluorocyclobutane (PFC-318), c-C4F8 | 9540.000 |
| GG1809 | Perfluoropropane (PFC-218), C3F8 | 8900.000 |
| GG1811 | R-507A, HFC-125/HFC-143a (50.0/50.0) | 3985.000 |
| GG1812 | R-417A, HFC-125/HFC-134a/HC-600 (46.6/50.0/3.4) | 2127.220 |
| GG1813 | R-413A, PFC-218/HFC-134a/HC-600a (9.0/88.0/3.0) | 1945.000 |
| GG1814 | R-410A, HFC-32/HFC-125 (50.0/50.0) | 1923.500 |
| GG1815 | R-408A, HFC-125/HFC-143a/HCFC-22 (7.0/46.0/47.0) | 2429.900 |
| GG1816 | R-407C, HFC-32/HFC-125/HFC-134a (23.0/25.0/52.0) | 1624.210 |
| GG1817 | R-407B, HFC-32/HFC-125/HFC-134a (10.0/70.0/20.0) | 2546.700 |
| GG1818 | R-407A, HFC-32/HFC-125/HFC-134a (20.0/40.0/40.0) | 1923.400 |
| GG1819 | R-404A, HFC-125/HFC-143a/HFC-134a (44.0/52.0/4.0) | 3942.800 |
| GG1820 | R-401B, HCFC-22/HFC-152a/HCFC-124 (61.0/11.0/28.0) | 15.180 |
| GG1821 | R-401A, HCFC-22/HFC-152a/HCFC-124 (53.0/13.0/34.0) | 17.940 |
| GG1822 | 1,1,1,2,2,3,4,5,5,5- +Fluoropentane (HFC-43-10mee), CF3CHFCHFCF2CF3 | 1650.000 |
| GG1823 | 1,1,1,3,3- Pentafluorobutane (HFC-365mfc), CH3CF2CH2CF3 | 804.000 |
| GG1824 | 1,1,1,3,3- Pentafluoropropane (HFC-245fa), CHF2CH2CF3 | 858.000 |
| GG1825 | 1,1,2,2,3- Pentafluoropropane (HFC-245ca), CH2FCF2CHF2 | 716.000 |
| GG1826 | 1,1,1,3,3,3- Hexafluoropropane (HFC-236fa), CF3CH2CF3 | 8060.000 |
| GG1827 | 1,1,1,2,3,3- Hexafluoropropane (HFC-236ea), CHF2CHFCF3 | 1330.000 |
| GG1828 | 1,1,1,2,2,3- Hexafluoropropane (HFC-236cb), CH2FCF2CF3 | 1210.000 |

In conclusion, according to the above embodiments of the carbon emission reduction plan recommendation system and the method, the system implements a platform that receives the carbon emission data submitted by an enterprise and equipment specifications and raw materials (including fuel materials) stored in an external database. After the carbon emission data and the data of external database are integrated, an artificial intelligence technology is incorporated to analyze these data so as to obtain one or more carbon emission hotspots of the enterprise. A recommendation list of carbon emission reduction plans is formed. Visualized graphs are used for revealing effectiveness and cost of carbon emission reduction of each of the carbon emission reduction plans. The recommendation list and the visualized graphs are provided for a decision maker to select one suitable carbon emission reduction plan according to demand, so as to achieve an intelligent serving system that is used to recommend the carbon emission reduction plan with cost effectiveness. The system of the present invention can rapidly screen and simulate different carbon reduction paths for improving carbon management efficiency and accuracy based on some factors, such as actual emission status of a user (which may refer to the decision maker), available funds, policy restrictions and technical feasibility, etc.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A carbon emission reduction recommendation method, performed in a computer system, **characterized in that** the method comprises:
receiving carbon emission data and a carbon emission reduction requirement from a user;
using a computer technology to integrate the carbon emission data obtained internally and externally by the user so as to conduct carbon emission hotspot analysis, in which one or more carbon emission hotspots operated by the user are identified through a statistical method and an artificial intelligence algorithm and information of the one or more carbon emission hotspots is obtained;
matching any of the one or more carbon emission hotspots with one of available reduction measures stored in a reduction method database (408) and estimating effectiveness and cost of carbon emission reduction in accordance with the carbon emission reduction requirement submitted by the user; and
creating a recommendation list of carbon emission reduction plans according to a matching result that is obtained by querying the reduction method database (408) and the carbon emission reduction requirement.

2. The carbon emission reduction recommendation method according to claim 1, **characterized in that** an enterprise submits the carbon emission data that is created on a carbon asset management digital platform (35) or in carbon asset management reports (36) to the computer system, and wherein the carbon emission data comprises carbon verification data (461) and/or carbon footprint data (462) that are formed from equipment information (241) and raw material (242) of the enterprise, and the carbon emission data in different formats obtained from the carbon asset management digital platform (35) or the carbon asset management reports (36) are formatted to establish a carbon asset database (406).

3. The carbon emission reduction recommendation method according to claim 1, **characterized in that** the one or more carbon emission hotspots comprises one or more specific devices, materials and/or one or more working processes.

4. The carbon emission reduction recommendation method according to claim 1, **characterized in that** the recommendation list of carbon emission reduction plans comprises one or more carbon emission reduction plans that are ranked according to unit abatement cost, difficulty of implementation and return on investment, so as to form a ranked recommendation list of carbon emission reduction plans, and then the carbon emission reduction plans in the recommendation list use multi-dimensional ranking by considering carbon reduction potential, execution cost, and payback period.

5. The carbon emission reduction recommendation method according to any of claims 1 to 4, **characterized in that** the reduction method database (408) stores carbon emission reduction methods, specifications of equipment of manufacturers, information of raw and fuel materials, and alternative technical data of each of the manufacturers, and further integrates the carbon asset data and data of the carbon emission reduction methods.

6. The carbon emission reduction recommendation method according to claim 5, **characterized in that** the reduction method database (408) is established by steps of: obtaining one or more carbon emission reduction methods that are designed based on specifications of equipment, working processes, information of raw and fuel materials, and alternative technologies that are configured to produce carbon compounds, translating the one or more carbon emission reduction methods and establishing the reduction method database (408).

7. A carbon emission reduction plan recommendation system, **characterized in that** the system comprises:
a computer system, which implements a serving system (40), used to recommend a carbon emission reduction plan according to a carbon emission data submitted by a user and a carbon emission reduction requirement, wherein steps performed by the computer system comprise:
using a computer technology in the serving system (40) to obtain the carbon emission data by integrating internal data and external data at a user end, and perform carbon emission hotspot analysis so as to identify one or more carbon emission hotspots operated by the user through a statistical method and an artificial intelligence algorithm, and obtain information of the one or more carbon emission hotspots at the user end;
matching any of the one or more carbon emission hotspots and any of available reduction measures stored in a reduction method database (408) and estimating effectiveness and cost of carbon emission reduction in accordance with the carbon emission reduction requirement submitted by the user; and
creating a recommendation list of carbon emission reduction plans according to a matching result that is obtained by querying the reduction method database (408) and the carbon emission reduction requirement.

8. The carbon emission reduction plan recommendation system according to claim 7, **characterized in that** the one or more carbon emission hotspots comprises one or more specific devices, materials and/or one or more working processes.

9. The carbon emission reduction plan recommendation system according to claim 7, **characterized in that** the serving system (40) comprises a carbon asset database (406) and the reduction method database (408), the carbon asset database (406) stores the carbon emission data submitted by at least one user, and the carbon emission data comprises carbon verification data (461) and carbon footprint data (462); and wherein the reduction method database (408) stores reduction method data comprising reduction methods, equipment specifications, raw and fuel materials, and alternative technical data published by at least one external system from government, academic or private institutions; and the serving system (40) relies on data stored in the carbon asset database (406) and the reduction method database (408) to perform carbon emission hotspot analysis and integrates the carbon asset data and the reduction method data into an input data of an application system (50).

10. The carbon emission reduction plan recommendation system according to claim 9, **characterized in that** the serving system (40) comprises a communication module (203) that connects with at least one carbon asset management digital platform (35) by an application programming interface (404) via a network for acquiring the carbon emission data and/or at least one carbon asset management report (36), so as to obtain the carbon verification data (461) and/or carbon footprint data (462) of the user.

11. The carbon emission reduction plan recommendation system according to claim 9, **characterized in that** the recommendation list of carbon emission reduction plans includes one or more carbon emission reduction plans; and, in the application system (50), the one or more carbon emission reduction plans are ranked according to a unit abatement cost, a difficulty of implementation and a return on investment for forming a ranked recommendation list of carbon emission reduction plans; and, in the application system (50), the carbon emission reduction plans in the recommendation list use multi-dimensional ranking by considering carbon reduction potential, an execution cost and a payback period.

12. The carbon emission reduction plan recommendation system according to claim 11, **characterized in that**, in the application system (50), carbon emission reduction is performed using a user-selected carbon emission reduction plan, and the application system (50) continuously tracks carbon emission reduction effectiveness.

13. The carbon emission reduction plan recommendation system according to claim 11, **characterized in that** the user selects one of the carbon emission reduction plans in the recommendation list of carbon emission reduction plans via a user manipulation interface, and a simulation result is presented by visualizing the user-selected carbon emission reduction plan, and using a visualized graph to present an original carbon emission, individual contribution of each of the carbon emission reduction plans, a final simulated total carbon emission, and whether a reduction target is achieved.

14. The carbon emission reduction plan recommendation system according to claim 13, **characterized in that** the user manipulation interface is provided for checking, screening and ranking in order to select the carbon emission reduction plan, and the carbon emission reduction plan recommendation system (20) provides technical details and assessment summary to be checked so as to simulate different ones of the carbon emission reduction plans and support synchronous simulations of the carbon emission reduction plans.

15. The carbon emission reduction plan recommendation system according to any of claims 7 to 14, **characterized in that**, in the serving system (40), carbon emission reduction methods being obtained from a carbon emission reduction system (34) are translated for establishing the reduction method database (408), and the reduction method database (408) stores the carbon emission reduction methods, equipment specifications of each of the manufacturers, information of raw and fuel materials of each of the manufacturers, and alternative technical data of each of the manufacturers.
